# FASCICULE DE BREVET EUROPEEN

(11) **EP 2 909 137 B1**
(45) Date de publication et mention de la délivrance du brevet: **03.06.2020**
(21) Numéro de dépôt: 13795862.5
(22) Date de dépôt: 08.10.2013
(51) Int. Cl.: C08J 3/075, C08J 9/28, C01B 32/05

(54) **COMPOSITION THERMIQUEMENT ISOLANTE POUR GEL MONOLITHIQUE ORGANIQUE, SON UTILISATION ET SON PROCEDE DE PREPARATION**
THERMISCH ISOLIERENDE ZUSAMMENSETZUNG FÜR EIN ORGANISCHES MONOLITHISCHES GEL, VERWENDUNG DAVON UND VERFAHREN ZUR HERSTELLUNG DAVON
THERMALLY INSULATING COMPOSITION FOR ORGANIC MONOLITHIC GEL, USE THEREOF AND PROCESS FOR PREPARING SAME

(30) Priorité: 17.10.2012 FR 1259895
(43) Date de publication de la demande: 26.08.2015
(73) Titulaire: Hutchinson, 75008 Paris (FR)
(72) Inventeur: SWOBODA, Benjamin, F-77590 Bois Le Roi (FR); DUFOUR, Bruno, F-77430 Champagne Sur Seine (FR); SONNTAG, Philippe, F-77210 Avon (FR); DOMINIAK, Christophe, F-45290 Varennes-Changy (FR)
(74) Mandataire: Plasseraud IP
(86) Numéro de dépôt international: PCT/IB2013/059208
(87) Numéro de publication internationale: WO 2014/060906

(56) Documents cités:
- EP-A1- 2 080 736
- WO-A2-2005/056643
- US-A- 5 744 510
- BRUNO M M ET AL: "A novel way to maintain resorcinol-formaldehyde porosity during drying: Stabilization of the sol-gel nanostructure using a cationic polyelectrolyte", COLLOIDS AND SURFACES. A, PHYSICACHEMICAL AND ENGINEERING ASPECTS, ELSEVIER, AMSTERDAM, NL, vol. 362, no. 1-3, 5 juin 2010 (2010-06-05), pages 28-32, XP027046589, ISSN: 0927-7757 [extrait le 2010-05-12]
- PEKALA R W ET AL: "New organic aerogels based upon a phenolic-furfural reaction", JOURNAL OF NON-CRYSTALLINE SOLIDS, NORTH-HOLLAND PHYSICS PUBLISHING. AMSTERDAM, NL, vol. 188, no. 1-2, 1 juillet 1995 (1995-07-01), pages 34-40, XP004067973, ISSN: 0022-3093, DOI: 10.1016/0022-3093(95)00027-5

## Description

La présente invention concerne une composition carbonée gélifiée formant un gel monolithique polymérique organique apte à former par pyrolyse un monolithe de carbone poreux selon la revendication 1, une utilisation de cette composition selon la revendication 9, et un procédé de préparation de cette composition carbonée selon la revendication 10. L'invention s'applique notamment à l'obtention de tels gels organiques, tels que des aérogels, ou de tels monolithes de carbone de très faible densité et de surface spécifique et de volume poreux élevés, pour leur utilisation comme matériaux super isolants thermiques présentant une conductivité thermique inférieure ou égale à 40 mW.m⁻¹.K⁻¹.

Les aérogels sont des matériaux poreux obtenus après gélification puis séchage du gel, dans lequel le liquide servant de solvant a été remplacé par un gaz ou un mélange gazeux. A très faible densité (ou à volume poreux élevé), ces matériaux sont très prometteurs pour des utilisations comme isolants thermiques. En effet, leur nanoporosité permet de limiter les effets de convection de l'air contenu dans les pores.

La préparation des aérogels de très faible densité est cependant compliquée, à cause de leurs propriétés mécaniques limitées qui n'autorisent pas à ce jour un séchage classique en étuve notamment à cause de la vaporisation du solvant lors de ce séchage en étuve qui engendre des contraintes internes dans le matériau détruisant sa nanostructure et y créant des macro-fissures. C'est la raison pour laquelle on utilise conventionnellement un séchage au CO₂ supercritique pour la production de ces aérogels de basse densité. Cette méthode donne de bons résultats sur la stabilité de la nanostructure, mais elle présente l'inconvénient de pénaliser le coût de fabrication de l'aérogel.

Les aérogels de silice, qui sont les plus étudiés pour des applications de super isolants thermiques (ces aérogels peuvent présenter des conductivités thermiques de l'ordre de 0,015 à 0,020 W.m⁻¹.K⁻¹), n'échappent pas à ces constats. Ainsi avec un séchage classique en étuve, ces gels de silice subissent une densification importante et une perte de leur nanostructure. De plus, les fissurations de ces gels créent des fines, ce qui pose des problèmes de toxicité du fait de la libération par la poudre de nanoparticules de silice. Les efforts de recherche se sont alors concentrés sur l'effet de ressort (« spring back » en anglais) des aérogels de silice après modification de la nature chimique de leur surface, et sur la substitution des groupements silanol par des groupements non réactifs permettant de rendre la densification réversible après un séchage évaporatif.

Ce principe a permis la production industrielle de poudre de silice de basse densité sous forme d'aérogel nanostructuré super isolant thermique, mais n'a pas permis la synthèse de matériau monolithique stable, contrairement aux aérogels organiques de haute surface spécifique qui sont eux aussi prometteurs pour des utilisations comme super isolants thermiques.

De manière connue, ces aérogels organiques sont typiquement préparés à partir d'une résine résorcinol formaldéhyde (RF), qui présente l'avantage d'être peu coûteuse et de pouvoir donner un gel mis en œuvre dans l'eau et pouvant présenter différentes valeurs de porosité et de densité en fonction des conditions de préparation (selon les rapports entre réactifs R et F et le catalyseur, par exemple). De plus, ces aérogels organiques peuvent être pyrolysés sous forme de carbone de haute surface spécifique présentant l'avantage d'absorber les rayonnements infrarouges, et donc de posséder une faible conductivité thermique à haute température. Par contre, ces gels chimiques obtenus par polycondensation des précurseurs sont irréversibles et ne peuvent donc pas être à nouveau mis en œuvre. De plus, à forte conversion, ces gels deviennent hydrophobes et précipitent, ce qui induit des contraintes mécaniques dans ces matériaux et accroît leur fragilité.

Comme pour les aérogels de silice, il est ainsi nécessaire, pour obtenir des aérogels monolithiques organiques de très basse densité, d'utiliser une technique de séchage suffisamment douce pour éviter une fracturation ou une contraction de la nanostructure et une perte de surface spécifique pour ces aérogels. Ce séchage est classiquement mis en œuvre via un échange de solvant par un alcool, puis via un séchage au moyen de CO₂ supercritique.

On peut par exemple citer le document US-A-4 997 804 pour la description d'un procédé de fabrication d'un tel aérogel monolithique organique à base de résine résorcinol formaldéhyde, qui utilise ce séchage par échange de solvant puis par fluide supercritique.

Comme indiqué précédemment, un inconvénient majeur de cette technique de séchage est qu'elle est complexe à mettre en œuvre et très coûteuse.

La publication "A novel way to maintain resorcinol-formaldehyde porosity during drying: Stabilization of the sol-gel nanostructure using a cationic polyelectrolyte", Colloids and Surfaces A: Physicochemical and Engineering Aspects, Elsevier, Amsterdam, NL, vol. 362, no. 1-3, pages 28-32, divulgue une composition d'aérogel monolithique pyrolysée à 800° C, issue d'un gel chimique de RF comprenant, en plus d'un catalyseur basique C à base de carbonate de sodium, un polyélectrolyte cationique P constitué de poly(chlorure de diallyldiméthyl ammonium) (PDADMAC).

Un but de la présente invention est de proposer une composition carbonée gélifiée formant un gel monolithique polymérique organique apte à former par pyrolyse un monolithe de carbone poreux super isolant thermique (i.e. de conductivité thermique inférieure ou égale à 40 mW.m⁻¹.K⁻¹), qui permette de remédier à l'ensemble des inconvénients précités.

Ce but est atteint en ce que la Demanderesse vient de découvrir d'une manière surprenante que l'ajout en phase aqueuse, à des précurseurs d'une résine de type polyhydroxybenzène et de formaldéhyde, d'une famille d'additifs particulière constituée d'un polyélectrolyte cationique hydrosoluble, permet d'obtenir un gel monolithique ou son pyrolysat qui présentent à la fois une haute surface spécifique, une très basse densité et un volume poreux élevé, en pouvant se passer d'un séchage par échange de solvant et par fluide supercritique.

A cet effet, une composition carbonée selon l'invention qui est à base d'une résine issue au moins en partie de polyhydroxybenzène(s) R et de formaldéhyde(s) F, est telle qu'elle comprend au moins un polyélectrolyte cationique hydrosoluble P.

On notera que cette composition de l'invention incorporant ce polyélectrolyte cationique peut être avantageusement obtenue en utilisant un séchage en étuve bien plus simple à mettre en œuvre et pénalisant moins le coût de production du gel que le séchage par CO₂ supercritique. En effet, la Demanderesse a découvert que cet additif permet de conserver la forte porosité du gel obtenu suite à ce séchage en étuve et de lui conférer une très faible densité alliée à une surface spécifique et un volume poreux élevés.

Par « gel », on entend de manière connue le mélange d'une matière colloïdale et d'un liquide, qui se forme spontanément ou sous l'action d'un catalyseur par la floculation et la coagulation d'une solution colloïdale.

Par « polymère hydrosoluble », on entend un polymère qui peut être solubilisé dans l'eau sans adjonction d'additifs (de tensioactifs notamment), à la différence d'un polymère hydrodispersable qui est susceptible de former une dispersion lorsqu'il est mélangé à de l'eau.

Selon une autre caractéristique de l'invention, ladite composition carbonée comprend le produit d'une réaction de polymérisation dans un solvant aqueux W desdits polyhydroxybenzène(s) R et formaldéhyde(s) F, en présence dudit au moins un polyélectrolyte cationique

P dissous dans ce solvant et d'un catalyseur acide ou basique, ledit produit de la réaction de polymérisation comprend ledit au moins un polyélectrolyte cationique P selon une fraction massique comprise entre 0,2 % et 2 %.

Avantageusement, ledit produit de la réaction de polymérisation peut comprendre :
- ledit au moins un polyélectrolyte cationique P selon une fraction massique très réduite qui est comprise de préférence entre 0,3 % et 1 %, et/ou
- ledit au moins un polyélectrolyte cationique P selon un ratio massique P/(R+F) par rapport auxdits polyhydroxybenzène(s) R et formaldéhyde(s) F, qui est compris entre 2 % et 10 % et de préférence entre 3 % et 7 %, et/ou
- ledit au moins un polyélectrolyte cationique P selon un ratio massique P/(R+F+W) par rapport auxdits polyhydroxybenzène(s) R, formaldéhyde(s) F et solvant aqueux W, qui est compris entre 0,3 % et 2 % et de préférence entre 0,4 % et 1,5 %.

Ledit au moins un polyélectrolyte peut être tout polyélectrolyte cationique totalement soluble dans l'eau et de force ionique faible.

De préférence, il s'agit d'un polymère organique choisi dans le groupe constitué par les sels d'ammonium quaternaire, le poly(chlorure de vinylpyridinium), la poly(éthylène imine), la poly(vinyl pyridine), le poly(chlorhydrate d'allylamine), le poly(chlorure de triméthylammonium éthylméthacrylate), le poly(acrylamide-co-chlorure de diméthylammonium) et leurs mélanges.

A titre encore plus préférentiel, ledit au moins un polyélectrolyte cationique hydrosoluble est un sel comportant des unités issues d'un ammonium quaternaire choisi parmi les poly(halogénure de diallyldiméthylammonium) et est de préférence le poly(chlorure de diallyldiméthylammonium) ou le poly(bromure de diallyldiméthylammonium).

Les polymères précurseurs utilisés dans la présente invention résultent de la polycondensation d'au moins un monomère du type polyhydroxybenzène et d'au moins un monomère formaldéhyde. Cette réaction de polymérisation peut impliquer plus de deux monomères disctincts. Les polyhydroxybenzènes sont des di- ou des tri- hydroxybenzènes, et avantageusement le résorcinol (1,3-di hydroxybenzène) ou le mélange du résorcinol avec un autre composé choisi parmi le catéchol, l'hydroquinone, le phloroglucinol.

On peut par exemple utiliser les polyhydroxybenzène(s) R et formaldéhyde(s) F suivant un rapport molaire R/F compris entre 0,3 et 0,7.

Selon une autre caractéristique de l'invention, ladite composition carbonée peut avantageusement présenter une surface spécifique comprise entre 400 m²/g et 1200 m²/g, et/ou un volume poreux compris entre 0,1 cm³/g et 3 cm³/g, et/ou un diamètre moyen de pores compris entre 3 nm et 30 nm, et/ou une densité comprise entre 0,04 et 0,4.

Un gel monolithique polymérique organique selon l'invention, tel qu'un aérogel, est constitué d'une composition carbonée telle que définie ci-dessus.

Avantageusement, ce gel et le monolithe de carbone obtenu par sa pyrolyse peuvent présenter une conductivité thermique comprise entre 10 mW.m⁻¹.K⁻¹ et 40 mW.m⁻¹.K⁻¹ et par exemple comprise entre 20 et 35 mW.m⁻¹.K⁻¹, ce gel étant utilisable pour l'isolation thermique d'un bâtiment.

Un procédé de préparation selon l'invention d'une composition carbonée telle que définie ci-dessus comprend :
a) une polymérisation dans un solvant aqueux W desdits monomère(s) polyhydroxybenzène(s) R choisis parmi les di- ou tri-hydroxybenzènes et formaldéhyde F, en présence dudit au moins un polyélectrolyte cationique P dissous dans ce solvant et d'un catalyseur, pour l'obtention d'une solution à base de ladite résine, en utilisant ledit au moins un polyélectrolyte cationique P selon une fraction massique dans la composition comprise entre 0,2% et 2%,
b) une gélification de la solution obtenue en a) pour l'obtention d'un gel de ladite résine,
c) un séchage du gel obtenu en b) pour l'obtention dudit gel monolithique polymérique organique.

Pour l'obtention du monolithe de carbone poreux, l'on soumet à une pyrolyse le gel séché obtenu en c).

Avantageusement et comme indiqué ci-dessus, l'on peut mettre en œuvre l'étape a) en utilisant ledit au moins un polyélectrolyte P selon une fraction massique dans la composition comprise entre 0,2 % et 2 %, et/ou selon un ratio massique P/(R+F) compris entre 2 % et 10 %, et/ou selon un ratio massique P/(R+F+W) compris entre 0,3 % et 2 %.

Egalement avantageusement, l'on peut mettre en oeuvre :
- l'étape a) à température ambiante, en dissolvant le(s)dit(s) polyhydroxybenzène(s) R et ledit au moins un polyélectrolyte cationique P dans ledit solvant aqueux, de préférence constitué d'eau, puis en ajoutant à la dissolution obtenue le(s)dit(s) formaldéhyde(s) F et ledit catalyseur qui peut être acide ou basique, puis
- l'étape b) par cuisson dans un four de ladite solution.

A titre de catalyseur utilisable à l'étape a), on peut par exemple citer des catalyseurs acides tels que des solutions aqueuses d'acide chlorhydrique, sulfurique, nitrique, acétique, phosphorique, trifluoroacétique, trifluorométhanesulfonique, perchlorique, oxalique, toluènesulfonique, dichloroacétique, formique, ou bien des catalyseurs basiques tels que le carbonate de sodium, l'hydrogénocarbonate de sodium, le carbonate de potassium, le carbonate d'ammonium, le carbonate de lithium, l'ammoniaque, l'hydroxyde de potassium et l'hydroxyde de sodium.

On peut par exemple utiliser à l'étape a) un rapport massique R/W entre polyhydroxybenzène(s) et eau compris entre 0,001 et 0,07.

De préférence, on met en œuvre l'étape c) par un séchage à l'air humide par exemple dans une étuve, sans échange de solvant ni séchage par fluide supercritique, pour l'obtention dudit gel monolithique polymérique organique qui présente (suivant les conditions de synthèse et notamment le pH) une surface spécifique comprise entre 400 m²/g et 1200 m²/g, et/ou un volume poreux compris entre 0,1 cm³/g et 3 cm³/g, et/ou un diamètre moyen de pores compris entre 3 nm et 30 nm, et/ou une densité comprise entre 0,04 et 0,4.

On notera que ce procédé de préparation en phase aqueuse selon l'invention permet ainsi d'obtenir des structures poreuses contrôlées qui varient en fonction des conditions de synthèse. Il est ainsi possible d'obtenir une structure de faible densité uniquement nanoporeuse (i.e. avec un diamètre de pores inférieur à 50 nm), ou bien avec une coexistence entre des nano- et des macropores (i.e. avec un diamètre de pores supérieur à 50 nm).

### Exemples de préparation selon l'invention :

Les exemples qui suivent illustrent la préparation de deux gels monolithiques organiques « témoin » G0 et G0', de cinq gels monolithiques organiques selon l'invention G1 à G5 et des carbones poreux correspondants « témoin » C0, C0' et selon l'invention C1 à C5, avec pour réactifs de départ :
- le résorcinol (R) de chez Acros Organics, pur à 98 %,
- le formaldéhyde (F) de chez Acros Organics, pur à 37 %,
- un catalyseur (C) constitué d'acide chlorhydrique pour les gels G1 à G4 et de carbonate de sodium pour le gel G5, et
- le poly(chlorure de diallyldiméthylammonium) (P), pur à 35 % (en solution dans l'eau W), pour les gels G1 à G5.

On a préparé ces gels G0, G0' et G1 à G5 comme suit.

On a dans un premier temps dissous dans un récipient contenant de l'eau le résorcinol R, et le polyélectrolyte P (à l'exception des gels G0 et GO'). Puis après totale dissolution, on a ajouté le formaldéhyde F. On a ajusté au pH approprié la solution polymérique obtenue avec le catalyseur C, étant précisé que l'on a réalisé l'ensemble de ces opérations à température ambiante (à environ 22° C). On a dans un second temps transvasé la solution obtenue dans des moules en Téflon®, que l'on a ensuite placés dans un four à 90° C pendant 24 h pour effectuer la gélification.

On a ensuite procédé au séchage du gel :
- en enceinte humide à 85° C avec un taux d'humidité de 90 % pendant 17 heures, pour obtenir les gels G0', G2, G4 et G5, ou
- par CO₂ supercritique après échange de solvant en bain d'acide trifluoroacétique pendant 3 jours puis en bain d'éthanol absolu pendant 4 jours, pour obtenir les aérogels G0, G1 et G3.

On a enfin pyrolysé sous azote les gels organiques G0, G0' et G1 à G5 à une température de 800° C, pour l'obtention des carbones monolithiques poreux C0, C0' et C1 à C5.

Dans le tableau 1 ci-après :
- R/F est le rapport molaire entre résorcinol et formaldéhyde,
- R/W est le rapport massique entre résorcinol et eau,
- P désigne la fraction massique de polyélectrolyte,
- P/(R+F) est le rapport massique entre le polyélectrolyte et les précurseurs résorcinol-formaldéhyde,
- P/(R+F+W) est le rapport massique entre le polyélectrolyte et les précurseurs résorcinol-formaldéhyde additionnés de l'eau, et
- CO₂ sc désigne un séchage utilisant du CO₂ supercritique, par opposition au séchage en étuve utilisable selon l'invention.

On a mesuré la conductivité thermique des gels G0, G2, G4 (voir tableau 2) et des carbones poreux C0, C2, C4 (voir tableau 3) à 22° C avec un conductivimètre de Neotim selon la technique du fil chaud, et l'on a mesuré les propriétés mécaniques en compression trois points et en traction du gel G4 et du carbone poreux correspondant C4 en comparaison de celles d'un aérogel de silice « témoin » GO" (voir tableau 4) avec un banc de traction/compression MTS selon la norme ASTM C165-07.

On a mesuré (tableau 2) pour chaque carbone poreux C0, C0' et C1 à C5 les surfaces spécifiques, les volumes poreux et les diamètres moyens de pores, au moyen de l'appareil TRISTAR 3020 de Micromeritics.

**Tableau 1 :**

| Quantités de réactifs/procédé | G0 | G0' | **G1** | **G2** | **G3** | **G4** | **G5** |
|---|---|---|---|---|---|---|---|
| R/F | 0,5 | 0,5 | 0,5 | 0,5 | 0,5 | 0,5 | 0,5 |
| R/W | 0,03 | 0,03 | 0,03 | 0,03 | 0,03 | 0,03 | 0,20 |
| P | 0 | 0 | 0,4 % | 0,4 % | 0,4 % | 0,4 % | - |
| P/(R+F) | 0 | 0 | 0,0626 | 0,0626 | 0,0640 | 0,0640 | 0,0379 |
| P/(R+F+W) | 0 | 0 | 0,0044 | 0,0044 | 0,0070 | 0,0070 | 0,0127 |
| pH | 3 | 3 | 3 | 3 | 1 | 1 | 6,13 |
| Méthode de séchage | CO₂ sc | étuve | CO₂ sc | étuve | CO₂ sc | étuve | étuve |

**Tableau 2 :**

| Gel organique | G0 | G0' | **G1** | **G2** | **G3** | **G4** | **G5** |
|---|---|---|---|---|---|---|---|
| Densité du gel | 0,40 | 1 | 0,20 | 0,40 | 0,04 | 0,04 | 0,20 |
| Conductivité thermique du gel (mW/mK) | 24 | - | - | 26 | - | 24 | - |

**Tableau 3 :**

| Carbone poreux | C0 | C0' | **C1** | **C2** | **C3** | **C4** | **C5** |
|---|---|---|---|---|---|---|---|
| Surface spécifique du carbone (m²/g) | 983 | 18 | 1014 | 1080 | 769 | 1170 | 670 |
| Volume poreux (cm³/g) du carbone | 0,58 | 0,012 | 0,87 | 0,95 | 0,32 | 0,47 | 0,26 |
| Diamètre moyen de pores (nm) du carbone | 3,6 | - | 10 | 10 | 5,4 | 4,1 | 3,9 |
| Densité du carbone | 0,40 | 0,90 | 0,20 | 0,40 | 0,04 | 0,06 | 0,20 |
| Conductivité thermique (mW/mK) du carbone | 30 | - | - | 33 | - | 29 | - |

La comparaison des carbones poreux « témoin » C0 et C0' avec ceux de l'invention C1 à C5 montre clairement que l'ajout du polyélectrolyte cationique P permet de maintenir, pour une faible densité obtenue, une structure nanométrique même avec un séchage en étuve (voir les valeurs de surface spécifique, de volume poreux et de diamètre moyen de pores des carbones poreux C2, C4, C5 qui sont du même ordre que celles de C0), alors que sans ce polyélectrolyte l'utilisation d'un séchage par CO₂ supercritique est nécessaire pour conserver cette nanostructure du carbone poreux C0.

Dans ces conditions, les densités des gels G1 à G5 et des carbones C1 à C5 nanostructurés selon l'invention sont toujours inférieures ou égales à 0,4.

En ajustant le pH à 1, ces résultats montrent également qu'il est possible d'obtenir un matériau monolithique (voir les gels G3 et G4 et les carbones C3 et C4 de l'invention) avec des densités beaucoup plus faibles (inférieures ou égales à 0,06).

Enfin, les résultats obtenus pour le gel G5 et le carbone correspondant C5 de l'invention montrent que la synthèse peut également être réalisée en milieu moins acide et même légèrement basique (pH > 6).

**Tableau 4 :**

| Structure du gel ou du carbone | Aérogel de silice* G0" | Gel G4 | Carbone poreux C4 |
|---|---|---|---|
| Densité | 0,1* | 0,04 | 0,06 |
| Module de compression (MPa) | 55* | 800 | 1050 |
| Résistance rupture (MPa) | 4* | 25 | 20 |

| | | | |
|---|---|---|---|
| * selon MA Aegerter, et al. "Aerogel Handbook" Advanced in sol gel derived materials and technologies, chap 22. | | | |

Ce tableau 4 montre que les gels et carbone poreux selon l'invention présentent des propriétés mécaniques très nettement améliorées par rapport à celles d'un aérogel de silice connu.

## Revendications

1. Composition carbonée gélifiée formant un gel monolithique polymérique organique apte à former par pyrolyse un monolithe de carbone poreux, la composition étant à base d'une résine issue au moins en partie de monomère(s) polyhydroxybenzène(s) R choisis parmi les di- ou tri-hydroxybenzènes et d'un monomère formaldéhyde F et présentant une conductivité thermique inférieure ou égale à 40 mW.m⁻¹.K⁻¹, dans laquelle ladite composition gélifiée comprend au moins un polyélectrolyte cationique hydrosoluble P, la composition comprenant le produit d'une réaction de polymérisation dans un solvant aqueux W desdits polyhydroxybenzène(s) R et du formaldéhyde F, en présence dudit au moins un polyélectrolyte cationique P dissous dans ce solvant et d'un catalyseur, et dans laquelle ledit produit de la réaction de polymérisation comprend ledit au moins un polyélectrolyte cationique P selon une fraction massique comprise entre 0,2 % et 2 %.

2. Composition carbonée selon la revendication 1, **caractérisée en ce que** la composition présente une conductivité thermique comprise entre 10 et 35 mW.m⁻¹.K⁻¹.

3. Composition carbonée selon la revendication 1 ou 2, **caractérisée en ce que** la composition présente une densité comprise entre 0,04 et 0,4.

4. Composition carbonée selon une des revendications 1 à 3, **caractérisée en ce que** ledit produit de la réaction de polymérisation comprend ledit au moins un polyélectrolyte cationique P selon un ratio massique P/(R+F) par rapport auxdits polyhydroxybenzène(s) R et formaldéhyde F, qui est compris entre 2 % et 10 %.

5. Composition carbonée selon une des revendications 1 à 4, **caractérisée en ce que** ledit produit de la réaction de polymérisation comprend ledit au moins un polyélectrolyte cationique P selon un ratio massique P/(R+F+W) par rapport auxdits polyhydroxybenzène(s) R, formaldéhyde F et solvant aqueux W, qui est compris entre 0,3 % et 2 %.

6. Composition carbonée selon une des revendications 1 à 5, **caractérisée en ce que** ledit au moins un polyélectrolyte cationique hydrosoluble P est un polymère organique choisi dans le groupe constitué par les sels d'ammonium quaternaire, le poly(chlorure de vinylpyridinium), la poly(éthylène imine), la poly(vinyl pyridine), le poly(chlorhydrate d'allylamine), le poly(chlorure de triméthylammonium éthylméthacrylate), le poly(acrylamide-co-chlorure de diméthylammonium) et leurs mélanges.

7. Composition carbonée selon la revendication 6, **caractérisée en ce que** ledit au moins un polyélectrolyte cationique hydrosoluble est un sel comportant des unités issues d'un ammonium quaternaire choisi parmi les poly(halogénure de diallyldiméthylammonium) et est de préférence le poly(chlorure de diallyldiméthylammonium) ou le poly(bromure de diallyldiméthylammonium).

8. Composition carbonée selon une des revendications précédentes, **caractérisée en ce qu'**elle présente :
- une surface spécifique comprise entre 400 m²/g et 1200 m²/g, et/ou
- un volume poreux compris entre 0,1 cm³/g et 3 cm³/g, et/ou
- un diamètre moyen de pores compris entre 3 nm et 30 nm.

9. Utilisation d'une composition selon une des revendications précédentes pour l'isolation thermique d'un bâtiment.

10. Procédé de préparation d'une composition carbonée selon une des revendications 1 à 8, **caractérisé en ce qu'**il comprend :
a) une polymérisation dans un solvant aqueux W desdits monomère(s) polyhydroxybenzène(s) R choisis parmi les di- ou tri-hydroxybenzènes et formaldéhyde F, en présence dudit au moins un polyélectrolyte cationique P dissous dans ce solvant et d'un catalyseur, pour l'obtention d'une solution à base de ladite résine, en utilisant ledit au moins un polyélectrolyte cationique P selon une fraction massique dans la composition comprise entre 0,2 % et 2 %,
b) une gélification de la solution obtenue en a) pour l'obtention d'un gel de ladite résine, et
c) un séchage du gel obtenu en b) pour l'obtention dudit gel monolithique polymérique organique.

11. Procédé de préparation selon la revendication 10, **caractérisé en ce que** l'on met en œuvre l'étape a) en utilisant ledit au moins un polyélectrolyte cationique P :
- selon un ratio massique P/(R+F) par rapport auxdits polyhydroxybenzène(s) R et formaldéhyde F, compris entre 2 % et 10 %, et/ou
- selon un ratio massique P/(R+F+W) par rapport auxdits polyhydroxybenzène(s) R, formaldéhyde F et solvant aqueux W, compris entre 0,3 % et 2 %.

12. Procédé de préparation selon la revendication 10 ou 11, **caractérisé en ce que** l'on met en œuvre :
- l'étape a) à température ambiante, en dissolvant le(s)dit(s) polyhydroxybenzène(s) R et ledit au moins un polyélectrolyte cationique P dans ledit solvant aqueux, de préférence constitué d'eau, puis en ajoutant à la dissolution obtenue le(s)dit(s) formaldéhyde F et ledit catalyseur acide ou basique, puis
- l'étape b) par cuisson dans un four de ladite solution.

13. Procédé de préparation selon une des revendications 10 à 12, **caractérisé en ce que** l'on met en œuvre l'étape c) par un séchage à l'air humide par exemple dans une étuve, sans échange de solvant ni séchage par fluide supercritique, pour l'obtention dudit gel monolithique polymérique organique qui présente :
- une surface spécifique comprise entre 400 m²/g et 1200 m²/g, et/ou
- un volume poreux compris entre 0,1 cm³/g et 3 cm³/g, et/ou
- un diamètre moyen de pores compris entre 3 nm et 30 nm, et/ou
- une densité comprise entre 0,04 et 0,4.

## Patentansprüche

1. Gelierte kohlenstoffhaltige Zusammensetzung, die ein monolithisches organisches Polymergel bildet, das zur Bildung eines porösen Kohlenstoffmonolithen durch Pyrolyse geeignet ist, wobei die Zusammensetzung auf einem Harz basiert, das zumindest teilweise von Polyhydroxybenzol-Monomer(en) R, ausgewählt aus den di- oder tri-Hydroxybenzolen, und einem Formaldehyd-Monomer F abgeleitet ist und eine Wärmeleitfähigkeit von weniger als oder gleich 40 mW.m⁻¹.K⁻¹ aufweist, wobei die gelierte Zusammensetzung mindestens einen wasserlöslichen kationischen Polyelektrolyten P umfasst, wobei die Zusammensetzung das Produkt einer Polymerisationsreaktion in einem wässrigen Lösungsmittel W des Polyhydroxybenzols/der Polyhydroxybenzole R und des Formaldehyds F in Gegenwart des mindestens einen in diesem Lösungsmittel gelösten kationischen Polyelektrolyten P und eines Katalysators umfasst und wobei das Produkt der Polymerisationsreaktion den mindestens einen kationischen Polyelektrolyten P gemäß einem Massenanteil zwischen 0,2 % und 2 % umfasst.

2. Kohlenstoffhaltige Zusammensetzung nach Anspruch 1, **dadurch gekennzeichnet, dass** die Zusammensetzung eine Wärmeleitfähigkeit zwischen 10 und 35 mW.m⁻¹.K⁻¹ aufweist.

3. Kohlenstoffhaltige Zusammensetzung nach Anspruch 1 oder 2, **dadurch gekennzeichnet, dass** die Zusammensetzung eine Dichte zwischen 0,04 und 0,4 aufweist.

4. Kohlenstoffhaltige Zusammensetzung nach einem der Ansprüche 1 bis 3, **dadurch gekennzeichnet, dass** das Produkt der Polymerisationsreaktion den mindestens einen kationischen Polyelektrolyten P gemäß einem Massenverhältnis P / (R + F) bezogen auf das Polyhydroxybenzol/die Polyhydroxybenzole R und das Formaldehyd F umfasst, das zwischen 2 % und 10 % liegt.

5. Kohlenstoffhaltige Zusammensetzung nach einem der Ansprüche 1 bis 4, **dadurch gekennzeichnet, dass** das Produkt der Polymerisationsreaktion den mindestens einen kationischen Polyelektrolyten P gemäß einem Massenverhältnis P / (R + F + W) bezogen auf das Polyhydroxybenzol/die Polyhydroxybenzole R, das Formaldehyd F und das wässrige Lösungsmittel W umfasst, das zwischen 0,3 % und 2 % liegt.

6. Kohlenstoffhaltige Zusammensetzung nach einem der Ansprüche 1 bis 5, **dadurch gekennzeichnet, dass** der mindestens eine wasserlösliche kationische Polyelektrolyt P ein organisches Polymer ist, ausgewählt aus der Gruppe bestehend aus den quaternären Ammoniumsalzen, Poly(vinylpyridinchlorid), Poly(ethylenimin), Poly(vinylpyridin), Poly(allylaminhydrochlorid), Poly(trimethylammoniumethylmethacrylatchlorid), Poly(acrylamid-co-dimethylammoniumchlorid) und Mischungen davon.

7. Kohlenstoffhaltige Zusammensetzung nach Anspruch 6, **dadurch gekennzeichnet, dass** der mindestens eine wasserlösliche kationische Polyelektrolyt ein Salz ist, das Einheiten umfasst, die von einem quaternären Ammonium abgeleitet sind, ausgewählt aus den Poly(diallyldimethylammoniumhalogeniden) und vorzugsweise Poly(diallyldimethylammoniumchlorid) oder Poly(diallyldimethylammoniumbromid) ist.

8. Kohlenstoffhaltige Zusammensetzung nach einem der vorhergehenden Ansprüche, **dadurch gekennzeichnet, dass** sie aufweist:
- eine spezifische Oberfläche zwischen 400 m²/g und 1200 m²/g und/oder
- ein Porenvolumen zwischen 0,1 cm³/g und 3 cm³/g und/oder
- einen durchschnittlichen Porendurchmesser zwischen 3 nm und 30 nm.

9. Verwendung einer Zusammensetzung nach einem der vorhergehenden Ansprüche zur Wärmedämmung eines Gebäudes.

10. Verfahren zur Herstellung einer kohlenstoffhaltigen Zusammensetzung nach einem der Ansprüche 1 bis 8, **dadurch gekennzeichnet, dass** es umfasst:
a) eine Polymerisation in einem wässrigen Lösungsmittel W des Polyhydroxybenzol-Monomers/der Polyhydroxybenzol-Monomere R, ausgewählt aus den di- oder tri-Hydroxybenzolen, und des Formaldehyds F in Gegenwart des mindestens einen in diesem Lösungsmittel gelösten kationischen Polyelektrolyten P und eines Katalysators zum Erhalten einer Lösung auf der Basis des Harzes, unter Verwendung des mindestens einen kationischen Polyelektrolyten P gemäß einem Massenanteil in der Zusammensetzung zwischen 0,2 % und 2 %,
b) ein Gelieren der in a) erhaltenen Lösung zum Erhalten eines Gels des Harzes und
c) ein Trocknen des in b) erhaltenen Gels zum Erhalten des monolithischen organischen Polymergels.

11. Herstellungsverfahren nach Anspruch 10, **dadurch gekennzeichnet, dass** der Schritt a) durchgeführt wird unter Verwendung des mindestens einen kationischen Polyelektrolyten P:
- gemäß einem Massenverhältnis P / (R + F), bezogen auf das Polyhydroxybenzol/die Polyhydroxybenzole R und das Formaldehyd F, zwischen 2 % und 10 %, und/oder
- gemäß einem Massenverhältnis P / (R + F + W), bezogen auf das Polyhydroxybenzol/die Polyhydroxybenzole R, das Formaldehyd F und das wässrige Lösungsmittel W, zwischen 0,3 % und 2 %.

12. Herstellungsverfahren nach Anspruch 10 oder 11, **dadurch gekennzeichnet, dass**:
- der Schritt a) bei Raumtemperatur durchgeführt wird, unter Auflösen des Polyhydroxybenzols/der Polyhydroxybenzole R und des mindestens eines kationischen Polyelektrolyten P in dem wässrigen Lösungsmittel, vorzugsweise bestehend aus Wasser, dann unter Zugabe des Formaldehyds/der Formaldehyde F und des sauren oder basischen Katalysators zu der erhaltenen Lösung, ferner
- der Schritt b) durch Backen der Lösung in einem Ofen durchgeführt wird.

13. Herstellungsverfahren nach einem der Ansprüche 10 bis 12, **dadurch gekennzeichnet, dass** der Schritt c) durch ein Trocknen in feuchter Luft, beispielsweise in einem Trockenschrank, weder mit einem Lösungsmittelaustausch noch mit einem Trocknen durch ein überkritisches Fluid, durchgeführt wird, um das monolithische organische Polymergel zu erhalten, das aufweist:
- eine spezifische Oberfläche zwischen 400 m²/g und 1200 m²/g und/oder
- ein Porenvolumen zwischen 0,1 cm³/g und 3 cm³/g und/oder
- einen durchschnittlichen Porendurchmesser zwischen 3 nm und 30 nm und/oder
- eine Dichte zwischen 0,04 und 0,4.

## Claims

1. A gelled carbon-based composition forming an organic polymeric monolithic gel capable of forming a porous carbon monolith by pyrolysis, the composition being based on a resin derived at least partly from polyhydroxybenzene(s) monomer(s) R chosen from the di- or tri- hydroxybenzenes and from a formaldehyde monomer F and having a thermal conductivity of less than or equal to 40 mW.m⁻¹.K⁻¹, wherein said gelled composition comprises at least one water-soluble cationic polyelectrolyte P, the composition comprising the product of a reaction for polymerization, in an aqueous solvent W, of said polyhydroxybenzene(s) R and of the formaldehyde F, in the presence of said at least one cationic polyelectrolyte P dissolved in this solvent and of a catalyst, and wherein said product of the polymerization reaction comprises said at least one cationic polyelectrolyte P in a mass fraction of between 0.2% and 2%.

2. The carbon-based composition as claimed in claim 1, **characterized in that** the composition has a thermal conductivity of between 10 and 35 mW.m⁻¹.K⁻¹.

3. The carbon-based composition as claimed in claim 1 or 2, **characterized in that** the composition has a density of between 0.04 and 0.4.

4. The carbon-based composition as claimed in one of claims 1 to 3, **characterized in that** said product of the polymerization reaction comprises said at least one cationic polyelectrolyte P in a P/(R+F) mass ratio with respect to said polyhydroxybenzene(s) R and formaldehyde F, which is between 2% and 10%.

5. The carbon-based composition as claimed in one of claims 1 to 4, **characterized in that** said product of the polymerization reaction comprises said at least one cationic polyelectrolyte P in a P/ (R+F+W) mass ratio with respect to said polyhydroxybenzene(s) R, formaldehyde F and aqueous solvent W, which is between 0.3% and 2%.

6. The carbon-based composition as claimed in one of claims 1 to 5, **characterized in that** said at least one water-soluble cationic polyelectrolyte P is an organic polymer chosen from the group consisting of quaternary ammonium salts, poly(vinylpyridinium chloride), poly(ethyleneimine), poly(vinylpyridine), poly(allylamine hydrochloride), poly(trimethylammonium ethyl-methacrylate chloride), poly(acrylamide-co-dimethylammonium chloride) and mixtures thereof.

7. The carbon-based composition as claimed in claim 6, **characterized in that** said at least one water-soluble cationic polyelectrolyte is a salt comprising units derived from a quaternary ammonium chosen from poly(diallyldimethylammonium halide) and is preferably poly(diallyldimethylammonium chloride) or poly(diallyldimethylammonium bromide).

8. The carbon-based composition as claimed in one of the preceding claims, **characterized in that** it has:
- a specific surface area of between 400 m²/g and 1200 m²/g, and/or
- a pore volume of between 0.1 cm³/g and 3 cm³/g, and/or
- an average pore diameter of between 3 nm and 30 nm.

9. The use of a composition as claimed in one of the preceding claims, for the thermal insulation of a building.

10. A process for preparing a carbon-based composition as claimed in one of Claims 1 to 8, **characterized in that** it comprises:
a) polymerization, in an aqueous solvent W, of said polyhydroxybenzene(s) monomer(s) R chosen from the di- or tri- hydroxybenzenes and formaldehyde F, in the presence of said at least one cationic polyelectrolyte P dissolved in this solvent and of a catalyst, in order to obtain a solution based on said resin, by using said at least one cationic polyelectrolyte P in a mass fraction in the composition of between 0.2% and 2%,
b) gelling of the solution obtained in a) in order to obtain a gel of said resin, and
c) drying of the gel obtained in b) in order to obtain said organic polymeric monolithic gel.

11. The preparation process as claimed in claim 10, **characterized in that** step a) is carried out by using said at least one cationic polyelectrolyte P:
- in a P/(R+F) mass ratio with respect to said polyhydroxybenzene(s) R and formaldehyde F, of between 2% and 10%, and/or
- in a P/(R+F+W) mass ratio with respect to said polyhydroxybenzene(s) R, formaldehyde F and aqueous solvent W, of between 0.3% and 2%.

12. The preparation process as claimed in claim 10 or 11, **characterized in that**:
- step a) is carried out at ambient temperature, by dissolving said polyhydroxybenzene(s) R and said at least one cationic polyelectrolyte P in said aqueous solvent, preferably consisting of water, and then by adding, to the solution obtained, said formaldehyde F and said acidic or basic catalyst, then
- step b) is carried out by curing said solution in an oven.

13. The preparation process as claimed in one of claims 10 to 12, **characterized in that** step c) is carried out by drying with humid air, for example in an oven, without solvent exchange or drying with supercritical fluid, in order to obtain said organic polymeric monolithic gel which has:
- a specific surface area of between 400 m²/g and 1200 m²/g, and/or
- a pore volume of between 0.1 cm³/g and 3 cm³/g, and/or
- an average pore diameter of between 3 nm and 30 nm, and/or
- a density of between 0.04 and 0.4.
